# EUROPEAN PATENT APPLICATION

(11) **EP 4 776 401 A1**
(43) Date of publication of application: **15.07.2026**
(21) Application number: 25224143.5
(22) Date of filing: 16.12.2025
(51) Int. Cl.: H01M 50/211, H01M 50/503, H01M 50/516

(54) **DEVICE AND METHOD FOR JOINING AND WELDING TAB TERMINALS OF ELECTRIC BATTERY CELLS**

(30) Priority: 13.01.2025 IT 202500000402
(71) Applicant: C.R.F. Società Consortile per Azioni, 10043 Orbassano (Torino) (IT)
(72) Inventor: ROSSI, Dario, 10043 Orbassano (Torino) (IT)
(74) Representative: Buzzi, Notaro & Antonielli d'Oulx S.p.A.

(57) **Abstract**

A device for joining and welding tab terminals (3) of electric battery cells (1), comprises a single tool (6) configured to perform an operating stroke in a direction (Y) orthogonal to the longitudinal direction (X) of the cells and parallel to the planes of the tab terminals (3), so as to progressively engage a pair of tab terminals (3) starting from a position on one side of the tab terminals (3). The tool (6) comprises a first tool section (7), which progressively engages the two tab terminals (3) from one side, forcing them to bend and join each other, a second tool section (8), which enables the engagement of a clamp element (10) over the joined portions (30) of the two tab terminals (3), and a third tool section (9), for the execution of a weld of the joined portions (30) of the two tab terminals (3) and of the clamp element (10) over the two tab terminals (3).

## Description

### Field of the invention

The present invention relates to devices for joining and welding tab terminals of electric battery cells. The invention relates, in particular, to "pouch" type battery cells and, more generally, to any type of battery cell provided with tab terminals, in the form of relatively thin laminations.

### Background of the invention

Various devices and methods for performing the joining and welding of tab terminals of electric battery cells have been proposed in the past. See, for example, documents EP 3 579 305 B1 and CN 216413213 U. However, there is a need for further improvements in this field, particularly for the purpose of simplifying and automating the welding process of the tab terminals of pouch cells or any other type of cell that is provided with tab terminals in the form of relatively thin laminations.

### Object of the invention

It is therefore an object of the present invention to provide a method for joining and welding tab terminals of electric battery cells that is more efficient and faster than what is possible with known solutions and that can be easily automated, so as to reduce production times and costs.

A further object is to provide a device for performing said method, which is relatively simple and low-cost and which is capable of simplifying and speeding up the operations for joining and welding the tab terminals of battery cells.

### Summary of the invention

In view of achieving the objects specified above, the invention has for its subject a device for joining and welding tab terminals of electric battery cells, comprising:
- a support structure, configured to receive and support at least two battery cells arranged side by side, having adjacent ends from which respective terminals in the form of flat tabs protrude, in a longitudinal direction of the cells, which are arranged in two parallel and spaced planes,
- a single tool, for the joining and welding of said tab terminals, configured to perform an operating stroke in a direction orthogonal to the longitudinal direction of the cells and parallel to the planes of the tab terminals, so as to progressively engage the pair of tab terminals starting from a position to the side of the tab terminals,
- said single joining and welding tool comprising:
- a first tool section, which engages the two tab terminals first and which has a tapered configuration in a direction opposite to the direction of movement in said operating stroke of the tool, such that said first tool section progressively engages the two tab terminals from one side, forcing them to bend and join together in a plane parallel to and intermediate between the planes in which the two tab terminals are initially arranged,
- a second tool section, arranged to encounter the tab terminals after said first tool section, during the operating stroke of said tool, said second tool section being configured to enable the engagement of a clamp element over the joined portions of the two tab terminals, and further including, a clamping device for applying pressure from two opposite sides on said clamp element, so as to press it onto the joined portions of the two tab terminals and so as to press, via the clamp element, said joined portions of the two tab terminals against each other, and
- a third tool section, arranged to encounter the tab terminals after said second tool section, during the operating stroke of the tool, said third tool section being configured to enable the execution of a weld of said joined portions of the two tab terminals and of said clamp element over the two tab terminals.

In one embodiment, said first tool section includes two parallel and spaced plates having front portions, with reference to the direction of movement in said operating stroke, which are divergent from each other.

According to a further characteristic of this embodiment, said clamp element comprises a U-shaped bracket made of metallic material, preferably aluminum.

Still according to a further characteristic, said third tool section is provided with a laser welding tool, movable with alternating motion to perform the welding of the two tab terminals.

In said embodiment, the device further comprises a magazine of said clamp elements.

The invention also has for its subject the method of joining and welding tab terminals of electric battery cells, executable by means of the device described above.

### Brief description of the drawings

Further characteristics and advantages of the invention will become apparent from the following description with reference to the accompanying drawings, provided by way of non-limiting example only, in which:
figure 1 illustrates in perspective view two examples of pouch-type battery cells,
figure 2 is an end view of two battery cells arranged side by side, at the beginning of the method according to the invention,
figures 3 - 5 are views corresponding to that of figure 2, which illustrate a first phase of the method according to the invention,
figure 6 illustrates an example of a clamp element, usable in the method according to the invention,
figures 7 - 9 are views corresponding to those of figure 2, which illustrate further phases of the method according to the invention,
figure 10 is a schematic view showing two battery cells at the end of the method according to the invention, and
figure 11 is a diagram of the device used in the method according to the invention.

### Detailed description of the invention

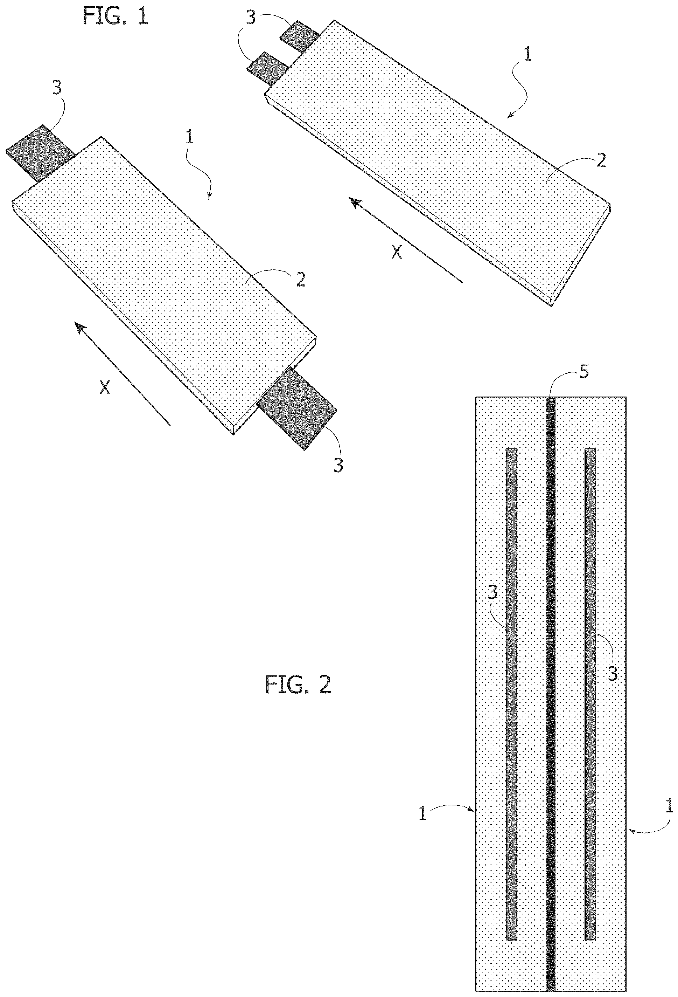

Figure 1 shows, for illustrative purposes, two examples of pouch-type battery cells. Each battery cell, indicated in its entirety by reference numeral 1, comprises a housing 2, from which two tab terminals 3 protrude. In one example, the two terminals 3 protrude from opposite ends of the pouch cell 1, while, in a second example, both tab terminals 3 protrude from the same end of the pouch cell.

The internal structure of the battery cell 1 is not described or illustrated here, since it can be made in any known manner.

As visible in figure 1, each pouch battery cell 1 has a main longitudinal direction X and a substantially flattened configuration. As already indicated, the device and the method according to the invention are in any case also applicable to cells of different types, provided they are equipped with tab terminals in the form of relatively thin laminations.

The device according to the invention is configured to quickly perform an operation of joining and welding a pair of tab terminals 3 of two adjacent cells 1.

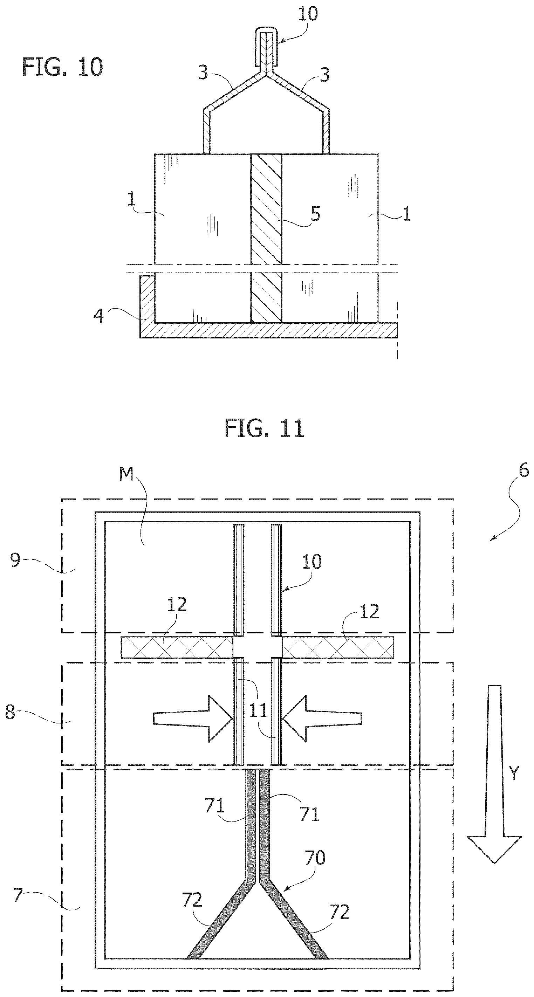

Figure 10 of the accompanying drawings shows two tab terminals 3, protruding from adjacent ends of two cells 1 arranged side by side.

According to the invention, it is possible to provide that an entire stack of battery cells 1 is arranged on a support and containment structure 4 (illustrated schematically in figure 10). In figure 10, the battery cells 1 are arranged vertically, but the battery cells 1 can be arranged with their longitudinal direction X oriented horizontally. Between each battery cell 1 and the adjacent cell, a separator layer 5 of any known type is interposed.

Figure 2 is an end view of two battery cells 1 arranged horizontally. Figure 2 shows the two cells 1 at the beginning of the method according to the invention. In this condition, the two tab terminals 3 are arranged in two parallel and spaced planes.

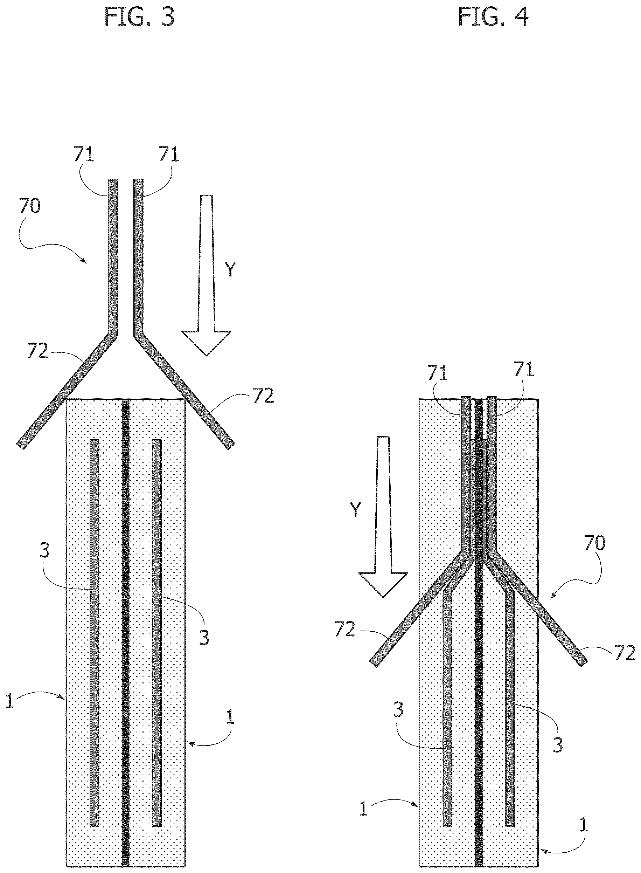

Figure 11 is a diagram of a joining and welding device comprising a single tool 6, configured to move in a direction Y (see also figures 3, 4), which is orthogonal to the longitudinal direction X of the battery cells and which is parallel to the planes of the tab terminals 3, in the initial condition of figure 2.

The tool 6 is configured to have an operating stroke in the direction Y starting from a position to the side of the pair of tab terminals 3 to be joined.

With reference to the diagram of figure 11, the tool 6 comprises a first tool section 7, a second tool section 8 and a third tool section 9, configured to successively engage the pair of tab terminals 3 following the movement of the tool 6 during the operating stroke in the Y direction.

Figures 3-5 show a first phase of the method which is performed by the engagement of the first tool section 7 on the pair of tabs 3.

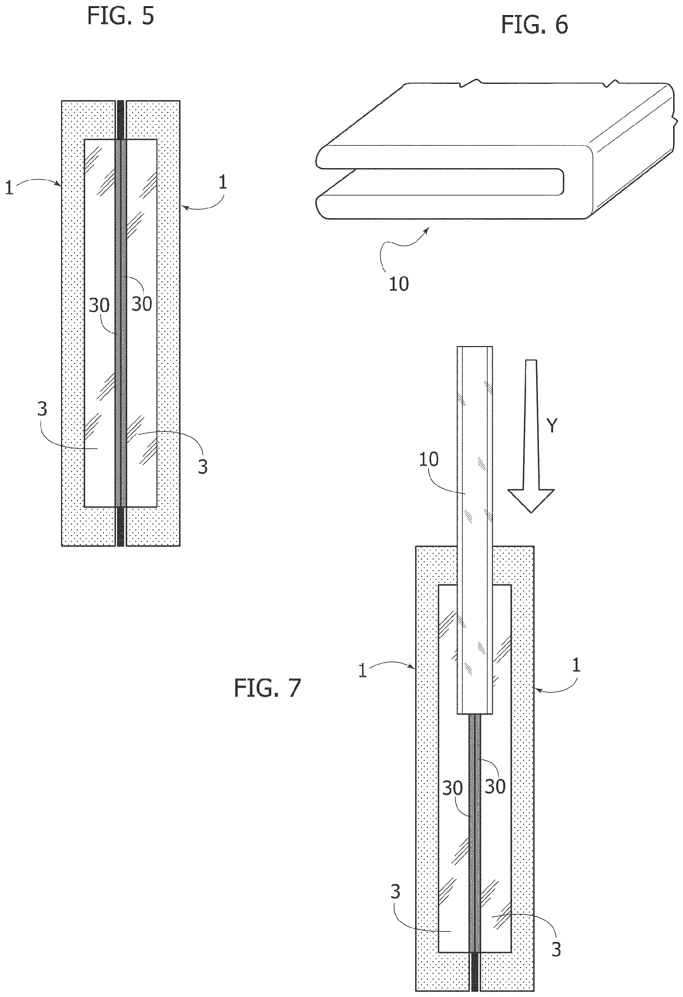

With reference to figure 3, the first tool section 7 includes a tool 70, having a tapered configuration in a direction opposite to the feed direction Y during the operating stroke of the device. In the illustrated example, the tool 70 consists of two parallel plates 71, having front portions 72 (with reference to the feed direction Y) which diverge from each other. The funnel-shaped configuration resulting from the structure described above causes the movement of the tool 70 in the Y direction to cause a progressive engagement of the divergent portions 72 over the pair of tabs 3, which are thus forced to progressively deform (figures 3, 4) and to join (figure 5) in an intermediate plane between the planes in which the tab terminals 3 are initially arranged (see also figure 10).

At the end of this first phase of the method, the two tab terminals 3 therefore have two portions 30 joined together.

As is evident from the foregoing, said first phase of the method is performed by the movement in the Y direction of the tool 6 (figure 11) until the complete engagement of the two juxtaposed portions 30 of the tab terminals 3 between the close positions 71 of the tool 70 is obtained.

At the end of this first phase of the method, the tool 6 (figure 11) continues in the Y direction, so as to bring the second tool section 8 into alignment with the joined portions 30 of the two tab terminals 3. In this condition, the second phase of the method can be performed, which involves the application, over the joined portions 30 of the two tab terminals 3, of a clamp element 10.

The clamp element 10, schematically illustrated in figure 6, can be, for example, in the form of a U-shaped bracket and is for example made of aluminum. The purpose of this element is also to facilitate the subsequent electrical connection of the pair of tab terminals with an electrically conductive bar of the battery assembly.

Figure 7 schematically illustrates the application of the clamp element 10 over the joined portions 30 of the two tab terminals 3, by sliding the element 10 in the Y direction.

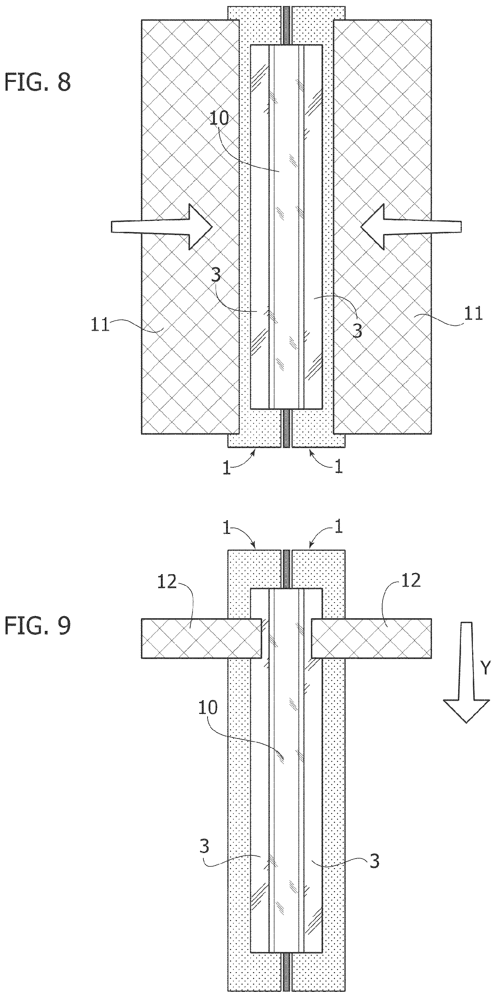

In the case of the embodiment illustrated in figure 11, a magazine M of clamp elements 10 is also associated with the third section 9 of the device 6. Once the second section 8 of the device 6 is in alignment with the tab terminals 3, a clamp element 10 from the magazine M is advanced over the two tab terminals, after which pressure is applied to the clamp element 10 from opposite sides by means of two pressure elements 11 (figure 8) of a clamping device of any known type, so as to press the clamp element 10 against the joined portions 30 of the tab terminals 3 and so as to consequently press the portions 30 of the terminals 3 against each other.

In the case of the embodiment illustrated in figure 11, the second tool section 8 includes the two pressure elements 11. These elements are initially kept in an open position, to allow the application of the clamp element 10 from the magazine M over the portions 30 of the terminals 3, after which the two pressure elements 11 are activated to apply a desired pressure on the clamp element 10 and on the joined portions 30 of the terminals 3. The construction details of the pressure elements 11 and their related actuators are not illustrated in detail here, since they can be made in any known manner.

Once this second phase of the method has been performed, the tool 6 (figure 11) proceeds further in its stroke in the Y direction, so as to bring the third tool section 9 into alignment with the tab terminals 3. The third tool section 9 is equipped with laser welding tools 12, movable with alternating motion along the Y direction, and suitable for performing a laser weld of the joined portions 30 of the terminals 3 and of the clamp element 10 over them.

As is evident from the foregoing, the device and the method according to the invention allow, by means of a single tool and by means of a single operating stroke, all the phases necessary to achieve the joining and welding of two tab terminals of two battery cells to be performed.

It can be envisaged that the same device is used in succession to perform the joining of the different pairs of tab terminals of the battery cells of a battery pack. Alternatively, a system using multiple devices according to the invention simultaneously can be envisaged, to perform in an extremely short time the joining of all the tab terminals protruding from the cells of a stack of battery cells.

Naturally, the principle of the invention remaining the same, the details of construction and the embodiments may vary widely with respect to what has been described and illustrated by way of example only, without thereby departing from the scope of the present invention, as defined in the appended claims.

## Claims

1. Device for joining and welding tab terminals (3) of electric battery cells (1), comprising:
- a structure (4), configured to receive and support at least two battery cells (1) arranged side by side, having adjacent ends from which respective terminals (3) protrude in a longitudinal direction (X) of the cells (1), the terminals (3) being in the form of flat tabs, which are arranged in two parallel and spaced apart planes,
- a single tool (6) for the joining and welding said tab terminals (3), configured to perform an operating stroke in a direction (Y) orthogonal to the longitudinal direction (X) of the cells and parallel to the planes of the tab terminals (3), so as to progressively engage a pair of tab terminals (3) starting from a position on one side of the tab terminals (3),
- said single joining and welding tool (6) comprising:
- a first tool section (7), configured to first engage the two tab terminals during said operating stroke, and having a configuration tapered in a direction opposite to the direction (Y) of movement in said operating stroke of the tool (6), such that said first tool section (7) progressively engages the two tab terminals (3) from one side, forcing them to bend and join each other in a plane parallel to and intermediate between the planes in which the two tab terminals (3) are initially arranged,
- a second tool section (8), arranged to meet the tab terminals (3) after said first tool section (7), during the operating stroke of said tool (6), said second tool section (8) being configured to enable the engagement of a clamp element (10) over the joined portions (30) of the two tab terminals (3), and further including a clamping device (11) for applying pressure from two opposite sides on said clamp element (10), so as to press the clamp element on the joined portions (30) of the two tab terminals (3) and so as to press, via the clamp element (10), said joined portions (30) of the two tab terminals (3) against each other, and
- a third tool section (9), arranged to meet the tab terminals (3) after said second tool section (8), during the operating stroke of said tool (6), said third tool section (9) being configured to enable a welding of said joined portions (30) of the two tab terminals (3) and of said clamp element (10) on said two tab terminals (3).

2. Device according to claim 1, **characterized in that** said first tool section (7) includes two parallel and spaced plates having front portions (72), with reference to the direction (Y) of movement in said operating stroke, which are divergent from each other.

3. Device according to claim 1, **characterized in that** said clamp element (10) comprises a U-shaped bracket made of metallic material, preferably aluminum.

4. Device according to claim 1, **characterized in that** said third tool section (9) comprises a laser welding tool (12) movable with alternating motion to perform the welding of the two tab terminals (3).

5. Device according to claim 1, **characterized in that** a magazine (M) of clamp elements (10) is associated with the third tool section (9).

6. Method for joining and welding tab terminals (3) of electric battery cells (1), comprising:
- providing a structure (4) configured to receive and support at least two battery cells (1) arranged side by side, having adjacent ends from which respective terminals protrude in a longitudinal direction (X) of the cells (1), the terminals (3) being in the form of flat tabs (3) which are arranged in two parallel and spaced apart planes,
- providing a single tool (6) for joining and welding said tab terminals (3),
- causing said tool (6) to perform an operating stroke in a direction (Y) orthogonal to the longitudinal direction of the cells and parallel to the planes of the tab terminals (3), so as to progressively engage a pair of tab terminals (3) starting from a position on one side of the tab terminals (3),
- during a first stage of the operating stroke of the tool (6), progressively engaging the two tab terminals (3) from one side, by means of a first tool section (7) including a tool (70) having a configuration tapered in a direction opposite to the direction (Y) of movement in said operating stroke, so as to force the terminals to bend and join together in a parallel intermediate plane between the planes in which the two tab terminals (3) are initially arranged,
- during a second phase of the operating stroke of the tool (6), by means of a second tool section (8), enabling an engagement of a clamp element (10) over the joined portions (30) of the two tab terminals (3), and applying pressure from two opposite sides on said clamp element (10), so as to press it onto the joined portions (30) of the two tab terminals (3) and so as to press, via the clamp element (10), said joined portions of the two tab terminals (3) against each other, and
- during a third phase of the operating stroke of the tool (6), by means of a third tool section, enabling a welding of said joined portions (30) of the two tab terminals (3) and of said clamp element (10) on the two tab terminals (3).
